# FASCICULE DE BREVET EUROPEEN

(11) **EP 0 628 478 B1**
(45) Date de publication et mention de la délivrance du brevet: **05.03.1997**
(21) Numéro de dépôt: 94400945.5
(22) Date de dépôt: 02.05.1994
(51) Int. Cl.: B64G 1/64, F41F 3/048, F41F 3/042

(54) **Dispositif pour éjecter un objet lié, de façon amovible, à une structure**
Vorrichtung zum Auswerfen eines mit einer Struktur lösbar verbundenen Objektes
Device for ejecting removable object attached to a structure

(30) Priorité: 04.06.1993 FR 9306715
(43) Date de publication de la demande: 14.12.1994
(73) Titulaire: AEROSPATIALE SOCIETE NATIONALE INDUSTRIELLE, 75016 Paris (FR)
(72) Inventeur: Lavigne, Michel Jean, F-33160 St Medard en Jalles (FR); Pavec, Jean-Luc, F-33460 Margaux (FR)
(74) Mandataire: Bonnetat, Christian

(56) Documents cités:
- EP-A- 0 454 545
- FR-A- 491 489
- US-A- 4 067 308
- US-A- 4 506 852

## Description

La présente invention concerne un dispositif pour éjecter un objet lié, de façon amovible, à une structure.

Plus particulièrement, quoique non exclusivement, les objets destinés à être éjectés de ladite structure par ledit dispositif sont notamment des microsatellites qui peuvent être porteurs d'équipements techniques à des fins scientifiques, par exemple, et qui sont alors lancés à partir de satellites selon une trajectoire prédéterminée leur permettant d'atteindre une orbite souhaitée ou un objectif précis en suivant une phase balistique. Bien évidemment, il va de soi que, outre ses applications au domaine spatial, le dispositif selon l'invention peut être utilisé dans d'autres domaines dès l'instant où un objet, qu'il soit de type scientifique, militaire, etc ..., doit être éjecté selon une trajectoire depuis une structure qui peut être celle d'un aéronef, d'un navire, d'un véhicule ou d'une station terrestre.

On connaît déjà des dispositifs de ce type. Par exemple, le document EP-A-0 454 545 de la demanderesse enseigne un dispositif de séparation et d'éjection d'un objet susceptible d'être soumis à une vitesse longitudinale et à une vitesse de rotation longitudinale ou de roulis autour de l'axe dudit objet, données, pour permettre la mise en phase balistique de l'objet selon la trajectoire prédéterminée. Pour cela, le dispositif comporte un ensemble à cylindre et piston coulissant respectivement liés à la structure et à l'objet. Des premiers moyens réalisés sous la forme d'une charge pyrotechnique sont logés dans ledit ensemble pour permettre l'éjection de l'objet, par le piston coulissant, selon la vitesse longitudinale, et des seconds moyens réalisés sous la forme d'une rampe hélicoïdale impriment à l'objet, par l'intermédiaire dudit piston alors rotatif, sa vitesse de rotation longitudinale.

Lorsque la charge pyrotechnique est initiée, rompant par ailleurs un organe frangible, le piston se déplace d'une position rentrée vers une position sortie contre une butée et, simultanément à sa course de déplacement, il est mis en rotation par sa liaison, au moyen d'un doigt, avec la rampe hélicoïdale. Ainsi, l'objet se désengage du dispositif avec une vitesse longitudinale et une vitesse de rotation selon une trajectoire prédéterminée pour se placer ensuite en phase balistique.

Ce dispositif de séparation et d'éjection, bien qu'assurant une mise en trajectoire appropriée dudit objet, présente néanmoins des inconvénients.

Tout d'abord, l'utilisation de charge pyrotechnique et des différents équipements à son fonctionnement augmente considérablement les coûts des dispositifs à cause des solutions techniques qui en découlent. De plus, on se heurte aux problèmes de vieillissement des poudres constituant la charge pyrotechnique. Par ailleurs, les vitesses longitudinale et rotative sont liées entre elles, de sorte qu'on ne peut modifier l'une sans modifier également l'autre. En effet, la composante longitudinale de la vitesse de rotation imposée par la rampe hélicoïdale est directement fonction de celle engendrée par la charge pyrotechnique.

Un autre inconvénient des dispositifs antérieurs connus réside dans l'impossibilité de régler la vitesse longitudinale de lancement, puisqu'à une charge pyrotechnique donnée correspondra une accélération déterminée du piston. Ainsi, chaque objet monté sur un dispositif d'éjection aura une unique trajectoire préétablie.

FR-A-491 489 enseigne un dispositif du type décrit dans le préambule de la revendication 1 comprenant de moyens élastiques susceptibles d'éjecter l'objet et de mettre celui-ci en rotation autour de son axe. Comme dans le cas antérieur les vitesses longitudinale et rotative imprimées à l'objet sont aussi liées entre elles.

La présente invention a pour but de remédier à ces inconvénients et concerne un dispositif d'éjection d'un objet lié de façon amovible à une structure, dont la conception évite l'usage d'une charge pyrotechnique, rend indépendantes les vitesses longitudinale et de roulis imprimées à l'objet, et autorise le réglage en vol de la vitesse longitudinale.

A cet effet, le dispositif pour éjecter un objet lié, de façon amovible, à une structure, du type comportant :
- un ensemble à cylindre et piston coulissant, dans lequel ledit cylindre est solidaire de ladite structure et ledit piston est lié audit objet ;
- des moyens élastiques susceptibles d'éjecter ledit objet et de mettre celui-ci en rotation autour de son axe, lesdits moyens élastiques comportant des premiers moyens élastiques logés dans ledit ensemble et faisant coulisser ledit piston d'une position rentrée vers une position sortie ; et
- un mécanisme de verrouillage commandable associé auxdits premiers moyens élastiques pour permettre lorsqu'il est commandé, la libération desdits premiers moyens élastiques ,
   est remarquable, selon l'invention,
   en ce que lesdits moyens élastiques comportent des seconds moyens élastiques reliant ledit piston coulissant audit objet et susceptibles de mettre en rotation ledit objet autour de son axe ; et
   en ce qu'est prévu un mécanisme de verrouillage commandable associé auxdits seconds moyens élastiques pour permettre, lorsqu'il est commandé, la libération desdits seconds moyens élastiques , entraînant la mise en rotation dudit objet.

Ainsi, grâce à l'invention, l'utilisation de deux moyens élastiques distincts pour imprimer à l'objet une vitesse longitudinale et une vitesse de rotation longitudinale ou de roulis permet, d'une part, de diminuer les coûts de fabrication et de s'affranchir des problèmes inhérents au vieillissement des poudres employées comme charge pyrotechnique et, d'autre part, de pouvoir déterminer les deux vitesses indépendamment l'une de l'autre.

Avantageusement, lesdits premiers moyens élastiques sont définis par un ressort de compression cylindrique logé dans ledit ensemble entre le cylindre et le piston, et lesdits seconds moyens élastiques sont définis par un ressort à action angulaire en spirale reliant ledit piston coulissant audit objet. On remarque ainsi la simplicité de réalisation et la fiabilité de fonctionnement desdits moyens élastiques. Les deux ressorts permettent, lorsqu'ils sont précontraints et verrouillés par leurs mécanismes respectifs, d'emmagasiner l'énergie susceptible d'imprimer à l'objet, après la libération des mécanismes de verrouillage, les vitesses respectivement longitudinale et de rotation assurant son éjection dudit dispositif selon une trajectoire.

Selon une autre caractéristique avantageuse de l'invention, le dispositif comprend, de plus, des moyens de réglage commandables de la course dudit piston coulissant par rapport au cylindre, associés audit ensemble et agissant sur lesdits premiers moyens élastiques. Ainsi, grâce à ces moyens, la vitesse longitudinale d'éjection dudit objet peut être réglée en vol si une modification de la trajectoire, prédéterminée initialement en fonction de la précontrainte des moyens élastiques, s'avère nécessaire pour une quelconque raison. Pour cela, ces moyens compriment plus ou moins le ressort de compression par l'intermédiaire du piston, de sorte que l'énergie emmagasinée par celui-ci et influençant directement la vitesse longitudinale d'éjection, peut être adaptée aux circonstances et réglée précisément.

Par ailleurs, entre ledit piston et ledit objet, est prévue avantageusement une pièce intermédiaire sur laquelle est susceptible d'être monté fixement ledit objet, et qui est reliée auxdits seconds moyens élastiques et à son mécanisme de verrouillage. Cette pièce joue le rôle d'interface pour être directement sollicitée en rotation par les seconds moyens élastiques et éjectée longitudinalement avec ledit objet par le piston poussé par les premiers moyens élastiques.

Ledit mécanisme de verrouillage commandable desdits premiers moyens élastiques peut comprendre une tige qui est fixée coaxialement au fond dudit cylindre à l'une de ses extrémités et dont son autre extrémité traverse ledit piston et est élargie, de façon oblongue, pour faire saillie par rapport à une ouverture de forme sensiblement correspondante ménagée dans ladite pièce intermédiaire, de façon que, lorsque lesdits seconds moyens élastiques sont précontraints, ladite extrémité élargie et ladite ouverture soient décalées angulairement, le piston étant maintenu en position rentrée comprimant lesdits premiers moyens élastiques, et que, lorsque lesdits seconds moyens élastiques sont libérés, par l'intermédiaire de leur mécanisme de verrouillage commandable, ladite ouverture, par la rotation de ladite pièce, se superpose à ladite extrémité élargie de la tige permettant le passage de la pièce à travers celle-ci, et l'éjection dudit objet, au moyen dudit piston en position sortie sous l'action desdits premiers moyens élastiques.

Quant au mécanisme de verrouillage commandable desdits seconds moyens élastiques, il peut comprendre par exemple au moins un doigt escamotable immobilisant ladite pièce en rotation lorsque lesdits seconds moyens élastiques sont précontraints.

Ainsi, ces mécanismes assurent, de façon techniquement simple, un verrouillage fiable des moyens élastiques, ainsi qu'un déverrouillage instantané.

De préférence, ladite pièce est montée sur un plateau annulaire en y étant liée en rotation mais de façon axialement libre, lesdits seconds moyens élastiques reliant respectivement ledit plateau à la face transversale dudit piston, et ledit mécanisme de verrouillage agissant, par son doigt escamotable, sur le plateau pour le maintenir fixe en rotation avec ladite pièce, lorsque les seconds moyens élastiques sont précontraints.

Avantageusement, une première butée à aiguilles ou à billes est interposée entre la face transversale dudit piston et ledit plateau, et une seconde butée à aiguilles ou à billes est interposée entre le ressort de compression et la face transversale dudit piston. La première butée assure une rotation optimale du plateau, lorsque le ressort en spirale se détend, et réduit de plus les frottements au maximum. Quant à la deuxième butée, elle réduit là aussi les frottements du ressort sur le piston qui a tendance à tourner lorsqu'il se détend.

Dans un mode préféré de réalisation, lesdits moyens de réglage comportent un mécanisme vis-écrou logé coaxialement dans ledit ensemble, ladite vis étant liée au fond dudit cylindre pour coopérer avec un organe moteur, tandis que ledit écrou est guidé coaxialement dans ledit piston, de façon que, lorsque ladite vis est entraînée en rotation par ledit organe moteur, ledit écrou se déplace le long dudit piston pour déterminer sa course qui correspond à celle dudit ressort cylindrique de compression. On comprend donc que la position de l'écrou, faisant office de butée, conditionne la course du piston et donc, par voie de conséquence, l'énergie susceptible d'être libérée par le ressort de compression, la vitesse longitudinale d'éjection dudit objet, et donc la trajectoire de celui-ci.

Plus particulièrement, ladite vis du mécanisme de réglage est creuse et entoure concentriquement la tige du mécanisme de verrouillage desdits premiers moyens élastiques. De préférence, la jupe latérale dudit piston, coulissant dans ledit cylindre, est pourvue de rainures latérales avec lesquelles ledit écrou coopère.

De préférence un élément d'amortissement est en outre agencé sur ledit écrou, permettant d'absorber le contact du piston avec ledit écrou lorsqu'il bute, en fin de course, contre ledit écrou.

Les figures du dessin annexé feront bien comprendre comment l'invention peut être réalisée. Sur ces figures, des références identiques désignent des éléments semblables.

La figure 1 représente, en perspective écorchée, un exemple de réalisation dudit dispositif d'éjection conforme à l'invention.

La figure 2 est une coupe axiale dudit dispositif de la figure 1 dans sa position initiale, pour laquelle lesdits premiers et seconds moyens d'éjection et de mise en rotation dudit objet sont verrouillés.

Les figures 3 et 4 sont respectivement des vues en coupe transversale selon les lignes III-III et IV-IV de la figure 2.

Les figures 5A et 5B sont des vues en perspective partielle de ladite pièce intermédiaire reliant ledit objet audit piston, respectivement seule et en combinaison avec l'extrémité élargie de la tige de maintien, formant le mécanisme de verrouillage des premiers moyens élastiques.

La figure 6 est une coupe axiale à une échelle réduite dudit dispositif dans sa position finale, pour laquelle lesdits premiers et seconds moyens sont libérés, avant l'éjection dudit objet.

La figure 7 est une vue partielle du dispositif de la figure 6 après l'éjection dudit objet.

Les figures 8A et 8B sont des vues en perspective partielle de la pièce intermédiaire après sa mise en rotation et libérant le mécanisme de verrouillage.

La figure 9 est une coupe axiale d'un autre exemple de réalisation du dispositif d'éjection selon l'invention, dans sa position initiale.

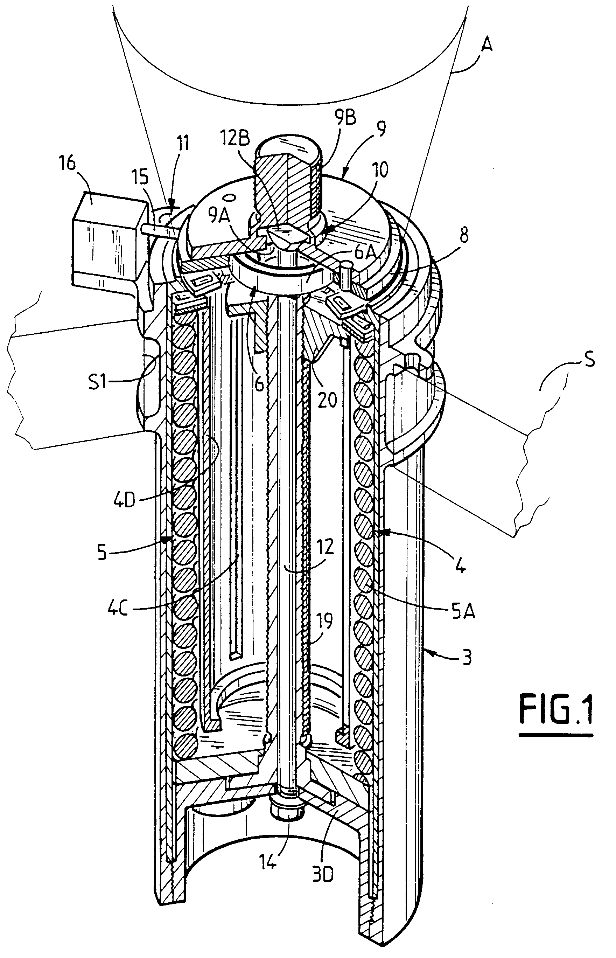

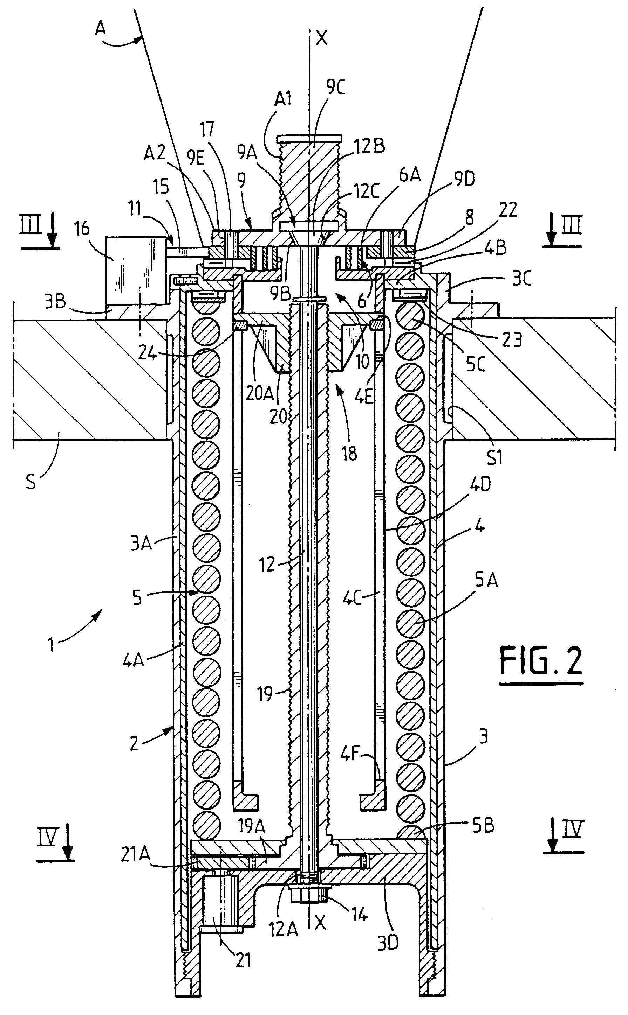

Le dispositif d'éjection 1, montré sur les figures 1 et 2, est destiné à assurer le lancement d'un objet A, tel que défini préalablement, à partir d'une structure S qui peut être celle d'un satellite, d'un aéronef, etc ... Dans cet exemple de réalisation, le dispositif d'éjection 1 comprend notamment un ensemble 2 à cylindre 3 et piston coulissant 4, des premiers moyens 5 pour éjecter ledit objet A, par coulissement dudit piston 4 d'une position rentrée vers une position sortie, et des seconds moyens 6 pour mettre en rotation ledit objet A autour de son axe de symétrie qui est confondu avec l'axe X-X dudit ensemble 2 lorsque l'objet est fixé à celui-ci.

Plus particulièrement, la paroi latérale 3A du cylindre traverse un passage S1 ménagé dans la structure S, pour s'appliquer sur cette dernière par des pattes radiales 3B prévues à l'extrémité 3C opposée au fond 3D du cylindre. Des organes de serrage, non représentés mais symbolisés par leurs axes géométriques, assurent la fixation du cylindre à la structure. Le piston 4 est logé dans le cylindre 3 et sa jupe latérale cylindrique 4A coulisse, dans cet exemple de réalisation, le long de la paroi latérale 3A du cylindre, tandis que sa face transversale 4B vient sensiblement à fleur de l'extrémité libre 3C du cylindre, lorsqu'il occupe la position rentrée.

Selon l'invention, les premiers et seconds moyens élastiques 5 et 6 pour éjecter et mettre en rotation l'objet A sont élastiques et ils sont définis, dans cet exemple de réalisation, respectivement par un ressort de compression cylindrique 5A et par un ressort à action angulaire en spirale 6A. Pour cela, le ressort 5A est logé dans l'ensemble 2 et il prend appui axialement contre le fond 3D du cylindre par son extrémité 5B et contre la face transversale 4B du piston par son extrémité 5C. Le ressort 6A est, quant à lui, disposé concentriquement à l'axe X-X, entre la face transversale 4B du piston 4 et l'objet A. Comme le montrent les figures 1 à 3, le ressort 6A est lié, à l'une de ses extrémités 6B, à la face transversale 4B du piston par un élément de fixation 7 et, à l'autre extrémité 6C, à un plateau 8 en forme de disque annulaire, relié à l'objet A par une pièce intermédiaire 9. Un élément de fixation 7 assure la solidarisation de cette autre extrémité audit plateau.

Des mécanismes de verrouillage commandables 10 et 11 maintiennent les ressorts 5A et 6A dans un état précontraint pour lequel l'énergie emmagasinée par chacun d'eux est maximale. Le mécanisme de verrouillage commandable 10 du ressort de compression 5A comprend, dans ce mode particulier de réalisation, une tige 12 disposée coaxialement dans l'ensemble 2 et coopérant, par le verrouillage proprement dit, avec la pièce intermédiaire 9 qui associe l'objet A audit ensemble 2, comme on le verra ultérieurement. La tige 12 est fixée à son extrémité 12A, par ailleurs filetée, au fond 3D du cylindre par un écrou 14, tandis que son autre extrémité 12B traverse la face transversale 4B, alors annulaire, du piston pour déboucher dans la pièce intermédiaire 9 servant d'interface entre l'objet A et l'ensemble 2. Avantageusement, l'extrémité 12B de la tige est élargie, de façon oblongue, et s'engage dans une ouverture 9A de forme sensiblement correspondante, ménagée dans la pièce intermédiaire.

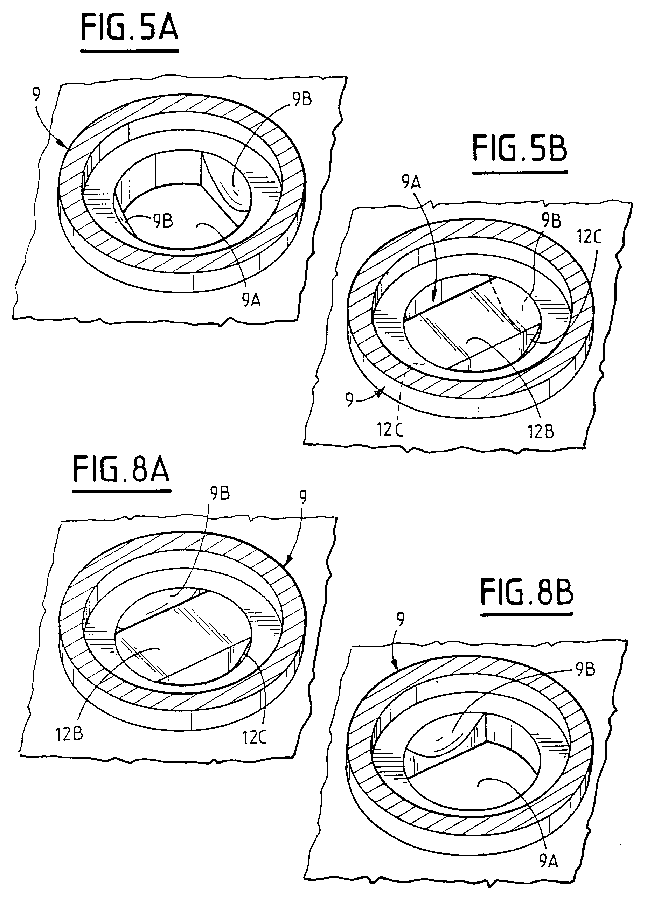

Sur la perspective de la pièce 9, représentée partiellement et isolément sur la figure 5A, on voit l'ouverture 9A sensiblement oblongue, tandis que, sur la figure 5B, on a illustré l'extrémité élargie et oblongue 12B de la tige, engagée dans l'ouverture 9A pour s'appliquer par ses bords opposés 12C sur des surfaces de réception complémentaires et opposées 9B débouchant dans l'ouverture oblongue 9A de la pièce, perpendiculairement à sa grande dimension. Ainsi, puisque l'ouverture 9A et l'extrémité élargie 12B sont décalées angulairement l'une de l'autre de π/2, la pièce 9, portant ledit objet A, est verrouillée axialement, comme le montrent les figures 1, 2 et 5B. Par conséquent, dans cette position angulairement décalée, la tige 12 qui est immobile par rapport au cylindre fixe 2, maintient, par l'intermédiaire de cette pièce 9, le piston 4 en position rentrée dans le cylindre, de sorte que le ressort de compression 5A est alors dans un état précontraint, ses spires étant jointives et l'énergie emmagasinée maximale.

A propos de cette pièce intermédiaire 9 qui présente une configuration cylindrique, sa liaison avec l'objet A s'effectue simplement par vissage d'un embout axial fileté 9C de celle-ci dans un trou taraudé A1 prévu dans la base (ou le culot) A2 de l'objet, laquelle base s'applique sur une collerette 9D de la pièce.

Le mécanisme de verrouillage commandable 11 du ressort 6A est constitué d'un doigt escamotable 15 relié par exemple à un électro-aimant 16 fixé à une patte radiale du cylindre. Ce doigt 15 coopère avec une encoche 8A ménagée à la périphérie du plateau annulaire 8, lequel supporte la pièce intermédiaire 9. Pour cela, des pions axiaux 17 sont solidaires du plateau 8 et s'engagent dans des trous correspondants 9E prévus dans la pièce, ce qui assure la liaison en rotation avec le plateau, mais de façon axialement libre par les pions 17.

Par conséquent, lorsque le doigt 15 est engagé dans l'encoche 8A du plateau, le ressort à actionnement angulaire 6A est dans son état précontraint, pour lequel l'énergie emmagasinée est maximale.

Par ailleurs, le dispositif d'éjection 1 de l'invention comporte des moyens 18 pour régler la course dudit piston coulissant 4 par rapport au cylindre 3, laquelle course correspond en conséquence à la course d'extension du ressort 5A et, donc, à l'énergie qu'il est susceptible de transmettre au piston et à la vitesse d'éjection de celui-ci. Grâce à cela, la vitesse longitudinale d'éjection dudit objet A peut être modifiée en cours de vol, si besoin est, et adaptée aux circonstances de façon à changer la trajectoire de l'objet.

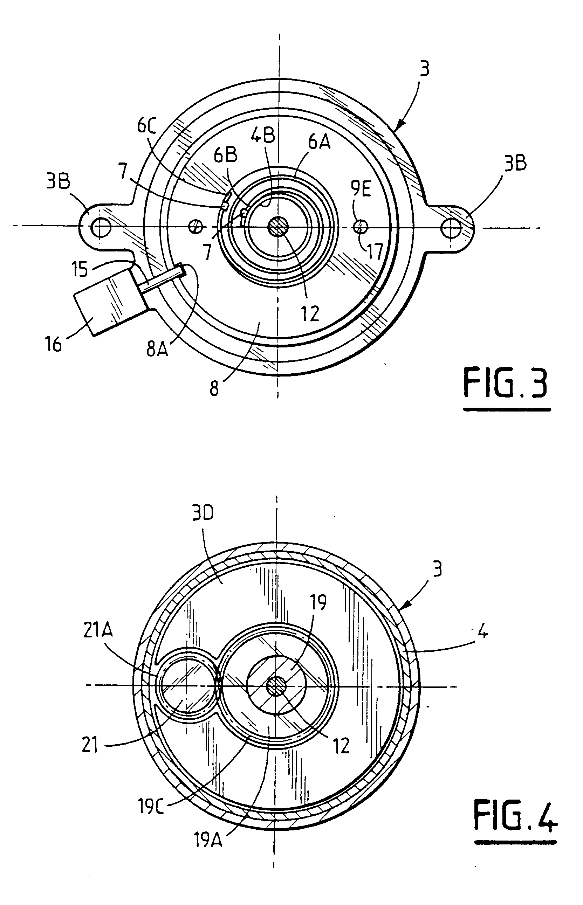

Ces moyens de réglage commandables 18 sont, dans ce mode de réalisation, constitués par un mécanisme vis-écrou 19,20 logé dans le cylindre 3. Pour cela, la vis 19 du mécanisme est creuse et entoure concentriquement la tige 12. L'extrémité inférieure 19A de la vis est montée de façon tourillonnante dans le fond 3D du cylindre, tandis que son extrémité supérieure 19B est proche de l'extrémité élargie 12B de la tige. Comme le montre la figure 4, une denture 19C est ménagée à la périphérie de l'extrémité inférieure 19A de la vis et elle coopère avec un pignon 21A d'un moteur d'entraînement 21 associé au fond 3D du cylindre. Ainsi, sous l'action du moteur, la vis 19 peut être entraînée en rotation. Sur cette vis, est monté l'écrou 20 du mécanisme, qui est pourvu d'ailettes radiales 20A, lesquelles sont introduites dans des rainures latérales correspondantes 4C ménagées dans une jupe latérale interne 4D du piston. Le ressort de compression 5A est alors situé entre les deux jupes latérales concentriques externe 4A et interne 4D. La hauteur des rainures 4C conditionne alors les positions extrêmes haute et basse susceptibles d'être occupées par l'écrou 20 et, donc, la course du piston entre sa position rentrée et sa position sortie.

On comprend, par conséquent, qu'en réglant la position de l'écrou 20, qui fait office de butée haute pour le piston 4, par rapport à la vis 19, on détermine la course fonctionnelle du piston et, ainsi, la course du ressort, l'énergie libérée par cette course, la vitesse longitudinale d'éjection puis la trajectoire de l'objet. Sur les figures 1 et 2, on voit que l'écrou 20 est situé en position extrême haute, c'est-à-dire que ses ailettes 20A sont en butée contre le fond correspondant 4E des rainures latérales 4C. Dans ce cas, la course du piston 4 est maximale, de sorte que l'énergie libérée par le ressort sera maximale, entraînant une vitesse longitudinale d'éjection dudit objet optimale. Bien entendu, on peut intervenir à tout moment, en cours de vol du satellite ou de l'aéronef, sur la course du piston en envoyant un ordre électrique au moteur 21 qui, par la rotation de la vis 19, entraîne le déplacement axial de l'écrou 20 formant butée dans les rainures 4C du piston jusqu'à occuper la position souhaitée.

Le fonctionnement du dispositif 1 se déroule de la façon suivante. Tout d'abord, on rappelle que les ressorts 5A et 6A sont précontraints et verrouillés par leurs mécanismes respectifs 10 et 11, et que la course du piston 4 est maximale, étant entendu que l'on peut intervenir sur celle-ci à tout moment par les moyens de réglage commandables 18 pour modifier la trajectoire de l'objet A.

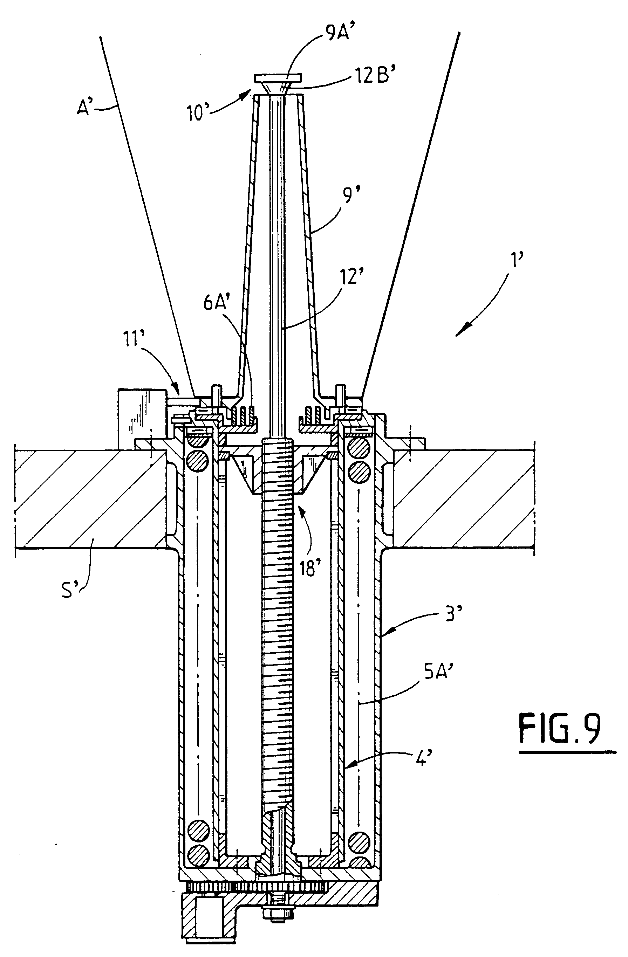

Lorsque l'ordre d'éjection dudit objet est donné, l'électroaimant 16 est commandé de sorte que le doigt 15, alors engagé dans l'encoche du plateau 8, s'escamote de celle-ci. A ce moment, puisque le plateau 8 n'est plus lié au doigt 15, il est entraîné en rotation sous l'action du ressort 6A qui se détend angulairement en libérant l'énergie emmagasinée. La pièce intermédiaire 9 liée en rotation par les pions 17 du plateau 8 est simultanément entraînée en rotation, ainsi que l'objet A vissé sur la pièce. Aussi, pour optimiser la rotation de l'ensemble plateau 8 - pièce 9 - objet A, une butée à aiguilles 22 est prévue entre le plateau tournant 8 et la face transversale 4B du piston. La mise en vitesse angulaire de l'objet A est ainsi réalisée. A la fin de la course angulaire, la pièce 9 se trouve dans une position angulaire pour laquelle son ouverture 9A est alors superposée à l'extrémité élargie 12B de la tige fixe 12, comme le montre la figure 8A. Par conséquent, le mécanisme 10 des premiers moyens élastiques 5 est déverrouillé, permettant le libre passage de la pièce 9 au travers de l'extrémité élargie 12B de la tige par son ouverture 9A, comme le montre la figure 8B.

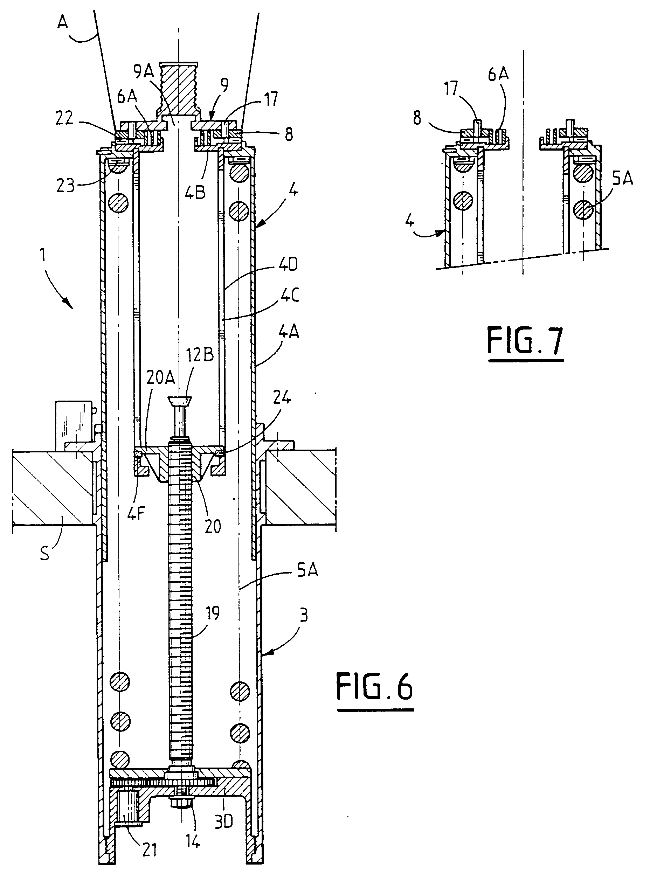

Le ressort cylindrique 5A, libéré axialement par la superposition de l'ouverture 9A et de l'extrémité élargie 12B, se détend brusquement en libérant son énergie et pousse le piston 4 axialement de sa position rentrée vers sa position sortie. La mise en mouvement longitudinal de l'objet A est alors réalisée. Le dispositif d'éjection 1 occupe à ce moment sa position finale représentée sur la figure 6.

Là aussi, pour éviter le frottement du ressort 5A directement sur le piston 4, on dispose une butée à aiguilles 23 entre l'extrémité 5C du ressort et la face transversale 4B du piston. De plus, afin d'absorber le choc entre le piston 4 et l'écrou 20 du mécanisme de réglage 18, on dispose un élément amortisseur 24 en matière synthétique, par exemple sur les ailettes radiales 20A de l'écrou, contre lequel s'applique les fonds correspondants 4F des rainures latérales, lorsque le piston 4 arrive en position sortie sous l'action de la détente du ressort 6A.

L'objet A, auquel est fixé la pièce intermédiaire 9, est ainsi animé d'une vitesse longitudinale d'éjection et d'une vitesse de rotation longitudinale et se sépare naturellement du dispositif et notamment des pions de guidage 17, pour suivre la trajectoire définie.

Le mode de réalisation du dispositif d'éjection 1', représenté sur la figure 9 en position initiale, diffère du précédent en ce que le passage de l'effort est réalisé au centre de gravité de l'objet A'. Les avantages qui en découlent sont notamment enseignés par le document EP-A-0 454 545 et, en particulier, un tel agencement réduit considérablement la vitesse parasite de rotation transverse, qui apparaît lorsque des bras de levier existent entre le passage de l'effort et le centre de gravité de l'objet alors éloigné.

Pour cela, l'extrémité élargie 12B' de la tige 12' se prolonge jusqu'au voisinage du centre de gravité de l'objet A', de sorte que cela nécessite également de prolonger en correspondance la pièce intermédiaire 9' pour que son ouverture oblongue 9A' coopère avec l'extrémité 12B' de la tige. En position verrouillée, le passage de l'effort pour maintenir le ressort 5A' comprimé est réalisé au centre de gravité de l'objet A', ce dernier étant "pincé" entre la tige 12' et la pièce 9', tandis qu'en position déverrouillée, la poussée longitudinale est assurée par la pièce 9' au niveau du centre de gravité de l'objet A'.

Le fonctionnement de ce dispositif 1' est identique à celui précédemment décrit avec le dispositif 1.

## Revendications

1. Dispositif pour éjecter un objet lié, de façon amovible, à une structure, du type comportant :
- un ensemble (2) à cylindre (3) et piston coulissant (4), dans lequel ledit cylindre est solidaire de ladite structure (S) et ledit piston est lié audit objet (A) ;
- des moyens élastiques susceptibles d'éjecter ledit objet et de mettre celui-ci en rotation autour de son axe, lesdits moyens élastiques comportant des premiers moyens élastiques (5) logés dans ledit ensemble (2) et faisant coulisser ledit piston (4) d'une position rentrée vers une position sortie ; et
- un mécanisme de verrouillage commandable (10) associé auxdits premiers moyens élastiques (5) pour permettre lorsqu'il est commandé, la libération desdits premiers moyens élastiques (5), caractérisé :
- en ce que lesdits moyens élastiques comportent des seconds moyens élastiques (6) reliant ledit piston coulissant (4) audit objet (A) et susceptibles de mettre en rotation ledit objet autour de son axe ; et
- en ce qu'est prévu un mécanisme de verrouillage commandable (11) associé auxdits seconds moyens élastiques pour permettre, lorsqu'il est commandé, la libération desdits seconds moyens élastiques (6), entraînant la mise en rotation dudit objet.

2. Dispositif selon la revendication 1,
caractérisé en ce que lesdits premiers moyens élastiques (5) sont définis par un ressort de compression cylindrique (5A) logé dans ledit ensemble (2) entre le cylindre et le piston, et en ce que lesdits seconds moyens élastiques (6) sont définis par un ressort à action angulaire en spirale (6A) reliant ledit piston coulissant (4) audit objet (A).

3. Dispositif selon l'une des revendications 1 ou 2,
caractérisé en ce qu'il comprend, de plus, des moyens de réglage commandables (18) de la course dudit piston coulissant (4) par rapport au cylindre (3), associés audit ensemble et agissant sur lesdits premiers moyens élastiques.

4. Dispositif selon l'une des revendications 1 à 3,
caractérisé en ce que, entre ledit piston (4) et ledit objet (A), est prévue une pièce intermédiaire (9) sur laquelle est susceptible d'être monté fixement ledit objet, et qui est reliée auxdits seconds moyens élastiques (6) et à son mécanisme de verrouillage (11).

5. Dispositif selon la revendication 4,
caractérisé en ce que ledit mécanisme de verrouillage commandable (10) desdits premiers moyens élastiques (5) comprend une tige (12) qui est fixée coaxialement au fond dudit cylindre (3) à l'une de ses extrémités (12A) et dont son autre extrémité (12B) traverse ledit piston et est élargie, de façon oblongue, pour faire saillie par rapport à une ouverture (9A) de forme sensiblement correspondante ménagée dans ladite pièce intermédiaire (9), de façon que, lorsque lesdits seconds moyens élastiques sont précontraints, ladite extrémité élargie et ladite ouverture soient décalées angulairement, le piston étant maintenu en position rentrée comprimant lesdits premiers moyens élastiques, et que, lorsque lesdits seconds moyens élastiques sont libérés, par l'intermédiaire de leur mécanisme de verrouillage commandable, ladite ouverture, par la rotation de ladite pièce, se superpose à ladite extrémité élargie de la tige permettant le passage de la pièce à travers celle-ci, et l'éjection dudit objet, au moyen dudit piston en position sortie sous l'action desdits premiers moyens élastiques.

6. Dispositif selon la revendication 4,
caractérisé en ce que ledit mécanisme de verrouillage commandable (11) desdits seconds moyens élastiques (6) comprend au moins un doigt escamotable (15) immobilisant ladite pièce (9) en rotation lorsque lesdits seconds moyens élastiques (6) sont précontraints.

7. Dispositif selon la revendication 6,
caractérisé en ce que ladite pièce (9) est montée sur un plateau annulaire (8) en y étant liée en rotation mais de façon axialement libre, lesdits seconds moyens élastiques (6) reliant respectivement ledit plateau (8) à la face transversale dudit piston (4), et ledit mécanisme de verrouillage (11) agissant, par son doigt escamotable (15), sur le plateau pour le maintenir fixe en rotation avec ladite pièce, lorsque les seconds moyens élastiques sont précontraints.

8. Dispositif selon la revendication 7,
caractérisé en ce qu'une première butée à aiguilles ou à billes (22) est interposée entre la face transversale dudit piston et ledit plateau, et en ce qu'une seconde butée à aiguilles ou à billes (23) est interposée entre le ressort de compression et la face transversale dudit piston.

9. Dispositif selon l'une quelconque des revendications précédentes 3 à 8,
caractérisé en ce que lesdits moyens de réglage (18) comportent un mécanisme vis-écrou logé coaxialement dans ledit ensemble (2), ladite vis (19) étant liée au fond dudit cylindre pour coopérer avec un organe moteur (21), tandis que ledit écrou (20) est guidé coaxialement dans ledit piston (4), de façon que, lorsque ladite vis est entraînée en rotation, ledit écrou se déplace le long dudit piston pour déterminer sa course qui correspond à celle dudit ressort cylindrique de compression.

10. Dispositif selon la revendication 9,
caractérisé en ce que ladite vis (19) du mécanisme de réglage (18) est creuse et entoure concentriquement la tige (12) du mécanisme de verrouillage (10) desdits premiers moyens élastiques.

11. Dispositif selon l'une des revendications 9 ou 10,
caractérisé en ce que la jupe latérale dudit piston (4), coulissant dans ledit cylindre, est pourvue de rainures latérales (4C) avec lesquelles ledit écrou coopère.

12. Dispositif selon l'une des revendications 9 à 11,
caractérisé en ce qu'un élément d'amortissement (24) est agencé sur ledit écrou (20).

## Claims

1. Device for ejecting an object removably attached to a structure, of the type including:
- an assembly (2) comprising a cylinder (3) and a sliding piston (4) wherein said cylinder is fastened to said structure (S) and said piston is attached to said object (A);
- spring means adapted to eject said object and to rotate the latter about its axis, said spring means including first spring means (5) accommodated in said assembly (2) and causing said piston (4) to slide from a retracted position to a deployed position; and
- a selectively operable locking mechanism (10) associated with said first spring means (5) which is operated to enable release of said first spring means (5), characterized:
- in that said spring means include second spring means (6) linking said sliding piston (4) to said object (A) and adapted to rotate said object about its axis; and
- in that a selectively operable locking mechanism (11) is provided, associated with said second spring means and operated to allow release of said second spring means (6), causing said object to be rotated.

2. Device according to claim 1,
characterized in that said first spring means (5) are defined by a cylindrical compression spring (5A) housed in said assembly (2) between the cylinder and the piston and in that said second spring means (6) are defined by a spiral circumferentially acting spring (6A) linking said sliding piston (4) to said object (A).

3. Device according to claim 1 or claim 2,
characterized in that it further comprises selectively operable means (18) for adjusting the travel of said sliding piston (4) relative to the cylinder (3), associated with said assembly and acting on said first spring means.

4. Device according to any one of claims 1 to 3, characterized in that an intermediate member (9) is provided between said piston (4) and said object (A) on which said object can be fixedly mounted and which is linked to said second spring means (6) and to its locking mechanism (11).

5. Device according to claim 4,
characterized in that said selectively operable locking mechanism (10) of said first spring means (5) comprises a rod (12) that is fixed coaxially to the back wall of said cylinder (3) at one end (12A) and the other end (12B) of which passes through said piston and is widened in an oblong manner to project from an opening (9A) of substantially corresponding shape formed in said intermediate member (9) so that, when said second spring means are prestressed, said widened end and said opening are offset circumferentially, the piston being held in the retracted position compressing said first spring means, and in that, when said second spring means are released by their selectively operable locking mechanism, by virtue of the rotation of said member said opening is superposed with said widened end of the rod, allowing the member to pass through the latter and allowing ejection of said object by said piston in the deployed position due to the action of said first spring means.

6. Device according to claim 4,
characterized in that said selectively operable locking mechanism (11) of said second spring means (6) comprises at least one retractable finger (15) immobilizing said member (9) against rotation when said second spring means (6) are prestressed.

7. Device according to claim 6,
characterized in that said member (9) is mounted on an annular plate (8) with which it is constrained to rotate but relative to which it is free to move axially, said second spring means (6) respectively linking said plate (8) to the transverse face of said piston (4) and the retractable finger (15) of said locking mechanism (11) acting on the plate to constrain it to rotate with said member when said second spring means are prestressed.

8. Device according to claim 7,
characterized in that a first needle or ball thrust bearing (22) is disposed between the transverse face of said piston and said plate and in that a second needle or ball thrust bearing (23) is disposed between the compression spring and the transverse face of said piston.

9. Device according to any one of the preceding claims 3 through 8,
characterized in that said adjustment means (18) include a screw-nut mechanism housed coaxially in said assembly (2), said screw (19) being attached to the back wall of said cylinder to cooperate with a drive member (21) while said nut (20) is guided coaxially in said piston (4) so that, when said screw is rotated, said nut moves along said piston to determine its travel which corresponds to that of said cylindrical compression spring.

10. Device according to claim 9,
characterized in that said screw (19) of the adjustment mechanism (18) is hollow and concentrically surrounds the rod (12) of the locking mechanism (10) of said first spring means.

11. Device according to claim 9 or claim 10,
characterized in that the lateral skirt of said piston (4), sliding in said cylinder, is provided with lateral grooves (4C) with which said nut cooperates.

12. Device according to any one of claims 9 through 11,
characterized in that a damper member (24) is provided on said nut (20).

## Patentansprüche

1. Vorrichtung zum Auswerfen eines mit einer Struktur lösbar verbundenen Objekts, die umfaßt:
- eine Baugruppe (2) mit Zylinder (3) und Gleitkolben (4), deren Zylinder mit der Struktur (S) und deren Kolben mit dem Objekt (A) verbunden ist;
- elastische Mittel zum Auswerfen des Objekts und zur Drehung desselben um seine Achse, wobei die elastischen Mittel aus ersten elastischen Mitteln (5) in der Baugruppe (2) bestehen, die die Bewegung des Kolbens (4) aus einer eingefahrenen Stellung in eine ausgefahrene Stellung bewirken, und
- einen steuerbaren Verriegelungsmechanismus (10), der mit den ersten elastischen Mitteln (5) verbunden ist und bei Steuerung die Freigabe der ersten elastischen Mittel (5) ermöglicht, dadurch gekennzeichnet,
- daß die elastischen Mittel zweite elastische Mittel (6) haben, durch die der Gleitkolben (4) mit dem Objekt (A) verbunden ist, und die das Objekt um seine Achse in Drehung versetzen können, und
- daß ein steuerbarer Verriegelungsmechanismus (11) vorgesehen ist, der mit den zweiten elastischen Mitteln verbunden ist und bei Steuerung die Freigabe der zweiten elastischen Mittel (6) und damit die Drehung des Objekts ermöglicht.

2. Vorrichtung nach Anspruch 1,
dadurch gekennzeichnet, daß die ersten elastischen Mittel (5) aus einer zylindrischen Druckfeder (5A) bestehen, die in der Baugruppe (2) zwischen dem Zylinder und dem Kolben angeordnet ist, und dadurch, daß die zweiten elastischen Mittel (6) aus einer Spiralfeder mit Winkelwirkung (6A) bestehen, durch die der Gleitkolben (4) mit dem Objekt (A) verbunden ist.

3. Vorrichtung nach einem der Ansprüche 1 oder 2,
dadurch gekennzeichnet, daß sie außerdem steuerbare Mittel (18) zum Einstellen des Hubs des Gleitkolbens (4) gegenüber dem Zylinder (3) umfaßt, die mit der Baugruppe verbunden sind und auf die ersten elastischen Mittel einwirken.

4. Vorrichtung nach einem der Ansprüche 1 bis 3,
dadurch gekennzeichnet, daß zwischen dem Kolben (4) und dem Objekt (A) ein Zwischenteil (9) vorgesehen ist, an dem das Objekt fest angebracht werden kann und das mit den zweiten elastischen Mitteln (6) und mit seinem Verriegelungsmechanismus (11) verbunden ist.

5. Vorrichtung nach Anspruch 4,
dadurch gekennzeichnet, daß der steuerbare Verriegelungsmechanismus (10) der ersten elastischen Mittel (5) eine Stange (12) hat, die mit einem ihrer Enden (12A) koaxial am Boden des Zylinders (3) befestigt ist und deren anderes Ende (12B) durch den Kolben verläuft und länglich erweitert ist und an einer Öffnung (9A) von etwa entsprechender Form im Zwischenteil (9) übersteht, so daß, wenn die zweiten elastischen Mittel vorgespannt sind, das erweiterte Ende und die Öffnung winkelverschoben sind, wobei der Kolben in eingefahrener Stellung gehalten wird, in der die ersten elastischen Mittel zusammengedrückt sind, und, wenn die zweiten elastischen Mittel durch ihren steuerbaren Verriegelungsmechanismus freigegeben sind, die Öffnung durch die Drehung des Teils über dem erweiterten Ende der Stange angeordnet ist und das Passieren des Teils sowie das Auswerfen des Objekts durch den Kolben in ausgefahrener Stellung mittels der ersten elastischen Mittel ermöglicht.

6. Vorrichtung nach Anspruch 4,
dadurch gekennzeichnet, daß der steuerbare Verriegelungsmechanismus (11) der zweiten elastischen Mittel (6) mindestens einen einziehbaren Mitnehmer (15) hat, durch den das Teil (9), wenn die zweiten elastischen Mittel (6) vorgespannt sind, gegen Drehung blockiert wird.

7. Vorrichtung nach Anspruch 6,
dadurch gekennzeichnet, daß das Teil (9) an einem Ringteller (8) angebracht ist, mit dem es bei Drehung, axial jedoch lösbar, verbunden ist, wobei die zweiten elastischen Mittel (6) jeweils den Teller (8) mit der Querseite des Kolbens (4) verbinden und der Verriegelungsmechanismus (11) durch seinen einziehbaren Mitnehmer (15) auf den Teller einwirkt, damit dieser drehfest mit dem Teil verbunden ist, wenn die zweiten elastischen Mittel vorgespannt sind.

8. Vorrichtung nach Anspruch 7,
dadurch gekennzeichnet, daß zwischen der Querseite des Kolbens und dem Teller ein erstes Axialnadel- oder Axialkugellager (22) angeordnet ist, und dadurch, daß zwischen der Druckfeder und der Querseite des Kolbens ein zweites Axialnadel- oder Axialkugellager (23) angeordnet ist.

9. Vorrichtung nach einem der obigen Ansprüche 3 bis 8,
dadurch gekennzeichnet, daß die Einstellmittel (18) ein Spindel-Muttersystem haben, das koaxial in der Baugruppe (2) angeordnet ist, wobei die Spindel (19) mit dem Boden des Zylinders verbunden ist und mit einem Antriebsorgan (21) zusammenwirkt, während die Mutter (20) koaxial im Kolben (4) geführt wird, so daß sich die Mutter, wenn die Spindel in Drehung versetzt wird, während des Hubs, der dem Weg der zylindrischen Druckfeder entspricht, längs des Kolbens verschiebt.

10. Vorrichtung nach Anspruch 9,
dadurch gekennzeichnet, daß die Spindel (19) des Einstellmechanismus (18) hohl ist und konzentrisch die Stange (12) des Verriegelungsmechanismus (10) der ersten elastischen Mittel umgibt.

11. Vorrichtung nach einem der Ansprüche 9 oder 10,
dadurch gekennzeichnet, daß der seitliche Mantel des im Zylinder gleitenden Kolbens (4) seitliche Nuten (4C) hat, mit denen die Mutter zusammenwirkt.

12. Vorrichtung nach einem der Ansprüche 9 bis 11,
dadurch gekennzeichnet, daß an der Mutter (20) ein Dämpfungselement (24) angebracht ist.
